# EUROPEAN PATENT SPECIFICATION

(11) **EP 2 521 669 B1**
(45) Date of publication and mention of the grant of the patent: **12.03.2014**
(21) Application number: 10706045.1
(22) Date of filing: 04.01.2010
(51) Int. Cl.: B62M 1/16, B62M 17/00, B62K 5/02

(54) **SELF PROPELLED HAND VEHICLE**
SELBSTANGETRIEBENES FAHRZEUG
VOITURE AUTOPROPULSÉE

(43) Date of publication of application: 14.11.2012
(73) Proprietor: Aladjian, Hrand, 25020 Offlaga (BS) (IT); Zacchi, Franco, 25025 Manerbio (BS) (IT)
(72) Inventor: ZACCHI, Franco, I-25025 Manerbio (BS) (IT)
(74) Representative: Brunacci, Marco
(86) International application number: PCT/IB2010/000025
(87) International publication number: WO 2011/080544

(56) References cited:
- WO-A1-00/24630
- WO-A1-98/45165
- DE-U1- 20 017 601
- US-A- 1 553 239

## Description

### Technical field

The present invention concerns a hand propelled vehicle.

More precisely, the invention concerns a vehicle the propulsion of which is controlled by the force of the arms.

### Prior art

Various kinds of vehicles that can be operated by the force of the arms have been hitherto developed, both for meeting an increasing market demand for non-polluting vehicles, and for meeting the needs of people suffering from handicaps at the lower limbs.

GB 2 379 640 discloses for instance a vehicle for paraplegic people, which has a double handlebar controlling the rotation of a pair of rear wheels through a transmission assembly comprising a rod-crank coupling.

US 3,895,825 discloses a two-wheel vehicle in which a handlebar associated with an oscillating rod pivotally mounted on a tubular frame is provided. The oscillation of the rod causes the rotation of the rear wheel through a transmission assembly embodying a rod-crank mechanism and controls the steering of the front wheel through a connecting arm.

US 2006/0214387 discloses a hand-propelled three-wheel vehicle equipped with an oscillating handlebar associated with the vehicle frame through a vertical connecting arm transmitting the back-and-forth oscillatory motion of the handlebar to the rear wheels through a chain. The handlebar also controls the steering of the front wheel.

US 4,925,200 discloses a hand-propelled three-wheel vehicle, with an oscillating handlebar transmitting the oscillatory motion to the rear wheels through a pair of chains and respective free wheel gears. The oscillating handlebar also controls the steering of the front wheel.

US 5,713,590 discloses a four-wheel vehicle having a handlebar mounted on a oscillating rod, which controls both the steering of the front wheels, through a cable, and the rotation of the rear wheel, through a rod-crank transmission. Patent Application IT-BS-2006000298 discloses a hand-propelled vehicle in which the movement is driven by the oscillatory motion of a rod, which is associated with the vehicle frame and has mounted thereon the handlebar to steer the front wheel.

WO 024630 discloses a vehicle with a transmission assembly according to the preamble of claim 1.

The prior art solutions meet only partly the need, increasingly felt today, to have at disposal vehicles that are non-polluting, comfortable, safe, lightweight, handy and, above all, that can be operated with the least effort as possible, so that they can be used also by aged people.

Thus, it is a first object of the invention to provide a hand-propelled vehicle that demands a reduced operating effort, possibly lower than prior art vehicles, so that its use is easier.

It is another object of the invention to provide a vehicle that is robust and easy to manufacture and that demands less maintenance than prior art vehicles.

It is a further, but not the last object of the invention to provide a vehicle of the above kind, which can be produced at limited costs and is therefore suitable for large-scale industrial production, whereby diffusion of non-polluting means of transport is promoted.

### Description of the invention

The above and other objects are achieved by the hand-propelled vehicle as defined in the appended claims.

Advantageously, according to the invention, thanks to the use of a transmission assembly including a transmission shaft, perpendicular to the drive shaft and the driven shaft and kinematically connected to the drive shaft and the driven shaft through respective gears, the energy demand for driving the vehicle is reduced and it is possible to use gear ratios that do not excessively penalise the movement speed and therefore contribute to provide a smooth and continuous motion of the vehicle.

Still more advantageously, always according to the invention, thanks to the use of a pair of countershafts associated with respective free wheel devices, it is possible to fully take advantage of the back-and-forth oscillatory motion of the actuating rod and consequently to obtain a greater operation smoothness with a lower muscular effort.

Advantageously, always according to the invention, thanks to the arrangement of the transmission devices, it is possible to construct both vehicles for terrestrial use and vehicles for nautical use with limited costs.

### Brief Description of the Figures

Some embodiments of the transmission assembly according to the invention are disclosed hereinafter with reference to the accompanying Figures, in which:
- Fig. 1 is a top perspective view of a vehicle structure according to the invention, according to a first embodiment;
- Fig. 2 is a rear perspective view of the vehicle structure shown in Fig. 1;
- Fig. 3 is a bottom perspective view of the vehicle structure shown in Fig. 1;
- Fig. 4 is a side view of the vehicle structure shown in Fig. 1;
- Fig. 5 is a bottom perspective view of the vehicle structure shown in Fig. 1, according to a variant embodiment;
- Fig. 6 is a bottom perspective view of the vehicle structure according to the invention, according to a second embodiment;
- Fig. 7 is a perspective view of a terrestrial vehicle, embodying the structure shown in Fig. 5;
- Fig. 8 is a perspective view of a nautical vehicle, embodying the structure shown in Fig. 5.

### Description of some preferred embodiments

In all Figures, the same reference numerals have been used to denote equal or functionally equivalent components.

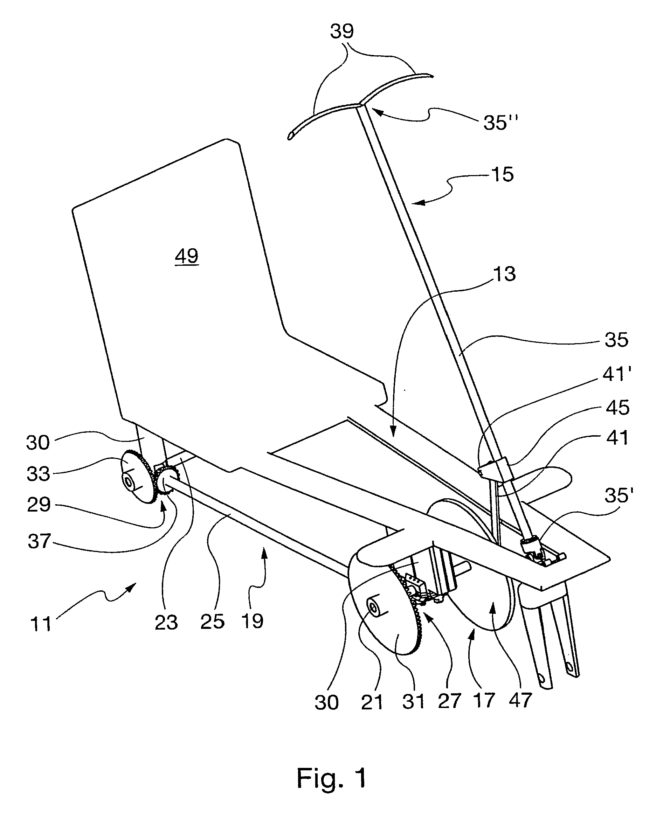

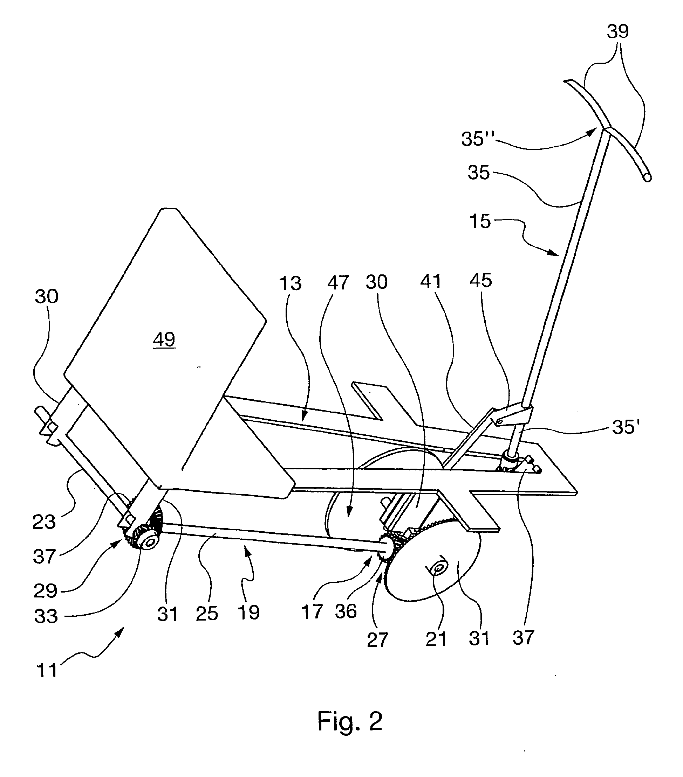

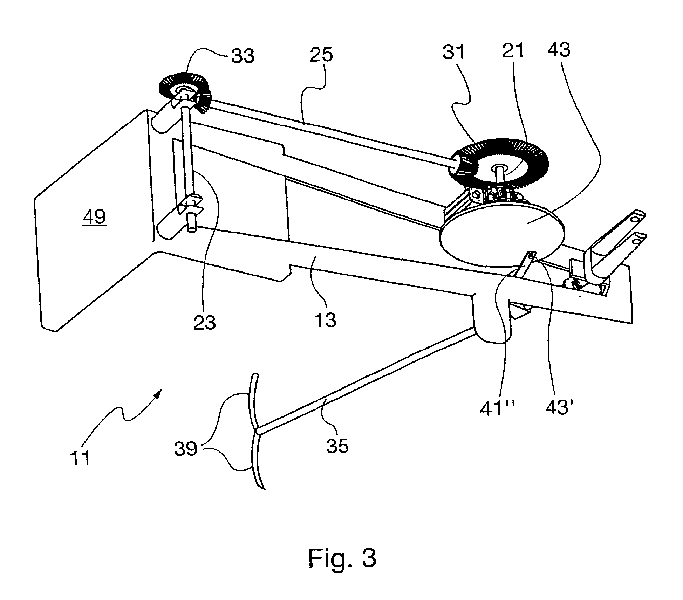

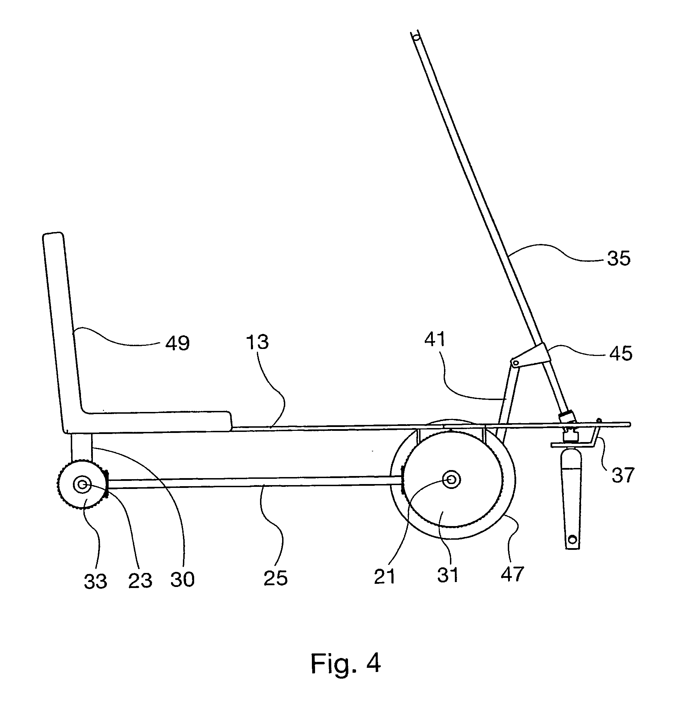

Referring to Figs. 1 to 4, the structure of a hand propelled vehicle, generally denoted by reference numeral 11, comprises a frame 13, a member 15 controlling the propulsion, associated with frame 13 and arranged to oscillate relative to the frame due to the pushing action of the arms of a vehicle driver, an assembly 17, controlled by said control member 15, for converting the reciprocating motion into a circular motion, and a transmission assembly 19 for transmitting the motion from a drive shaft 21 associated with said converting assembly 17 to a driven shaft 23 associated with a propelling member, e.g. a wheel or a screw, depending on whether structure 11 is used for a terrestrial or a nautical vehicle, respectively.

According to the invention, transmission assembly 19 includes at least one transmission shaft 25, perpendicular to drive shaft 21 and driven shaft 23 and kinematically connected to drive shaft 21 and driven shaft 23 through gears 27, 29.

According to the invention, each said gear 27, 29 comprises a respective toothed wheel 31, 33, fit on drive shaft 21 and driven shaft 23, respectively, and a respective sprocket wheel 36, 37, fit on transmission shaft 25. Preferably, said gears 27, 29 are conical gears.

In a preferred embodiment of the invention, drive shaft 21, driven shaft 23 and transmission shaft 25 are associated with frame 13 through supports 30 equipped with bearings, for instance ball bearings.

According to the invention, propulsion controlling member 15 comprises an actuating bar 35 having a proximal end 35' associated with frame 13 through a support 37 pivotally mounted on frame 13 so as to oscillate in a plane substantially orthogonal to drive shaft 21.

Actuating bar 35 also has a distal end 35" associated with a handle 39 that, in the illustrated example, is made as a handlebar in order it is grasped, preferably with both hands, and is pushed downwards and pulled upwards in order to perform the reciprocating oscillatory motion.

Assembly 17 converting the reciprocating motion into circular motion includes a rod-crank mechanism with a rod 41 and a crank 43, capable of converting the reciprocating oscillatory motion of actuating bar 35 into a rotation of drive shaft 21.

Rod 41 has a small end 41' connected to actuating bar 35, whereas crank 43 is fixedly connected to drive shaft 21.

In more detail, small end 41' of rod 41 is pivotally connected to a sleeve joint 45 for connection to bar 35, which joint enables the bar to rotate about its axis even while oscillating, so as to control the vehicle steering, as it will be apparent from the following description of two applications of the transmission assembly.

Always according to the illustrated exemplary embodiment, crank 43 is defined in correspondence of a disc 47 fit onto drive shaft 21, from which a crank pin 43' eccentrically extends. Rod 41 has a big end 41" pivotally mounted on said crank pin 43' of disc 47.

A seat 49 for the driver is associated with frame 13, preferably opposite propulsion controlling member 15.

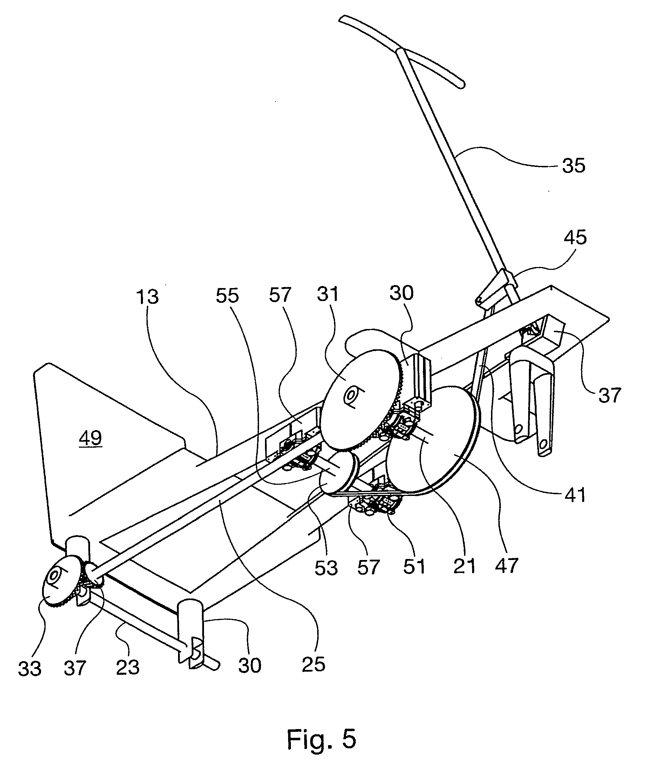

Referring to Fig. 5, there is shown a variant embodiment of vehicle structure 11 described above.

According to this variant embodiment, a flywheel 53 is kinematically connected through a belt 51 to the mechanism formed by rod 41 and crank 43. The flywheel comprises a disc-shaped body with suitable mass associated with a rotating shaft 55 arranged parallel to drive shaft 21 and mounted onto supports 57 equipped with bearings, for instance ball bearings, fastened to frame 13. Flywheel 53 is to make the propulsion motion of the vehicle smoother and more regular. More particular, the inertia accumulated by flywheel 53 enables attenuating motion discontinuity caused by the upper and lower dead points, which are encountered by actuating bar 35 during its oscillatory motion and at which inversion of the motion is requested of the vehicle driver.

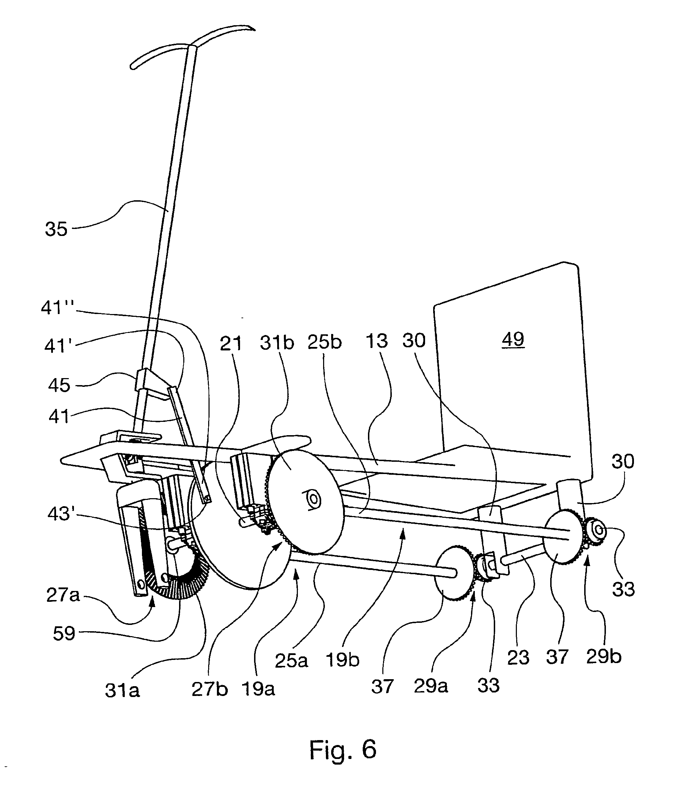

Turning now to Fig. 6, there is shown a second embodiment of the invention in which vehicle structure 11 comprises first and second transmission assemblies 19a and 19b, each including a respective transmission shaft 25a, 25b, perpendicular to drive shaft 21 and driven shaft 23 and kinematically connected to drive shaft 21 and driven shaft 23 through gears 27a, 27b, 29a, 29b.

According to the invention, each said gear 27a, 27b, 29a, 29b comprises a respective toothed wheel 31 a, 31 b, 33a, 33b fit on drive shaft 21 and driven shaft 23, respectively, and a respective sprocket wheel 36, 27, fit on transmission shaft 25a, 25b.

Preferably, said gears 27a, 27b, 29a, 29b are moreover conical gears. According to this embodiment of the invention, transmission assemblies 19a, 19b are located on opposite sides of the mechanism formed by rod 41 and crank 43.

Moreover, a respective free wheel device 59 will be advantageously interposed between the mechanism formed by rod 41 and crank 43 and each transmission shaft 25a, 25b, preferably in correspondence of gears 27a, 27b. According to this embodiment, the rotation of drive shaft 21 will be therefore limited to about 180° and will take place alternately in opposite directions. Thanks to free wheel devices 59, the rotation of drive shaft 21 will be alternately transmitted to transmission shafts 25a, 25b, which will complete one revolution by 360° upon two consecutive downward or upward strokes of rod 41.

It is to be appreciated that the coupling of gears 27a, 27b, 29a, 29b is a conical coupling and that it is obtained internally of toothed wheels 31 a, 31 b, so that the reciprocating motion of crank 43 is converted into a continuous rotational motion, in the same direction, of driven shaft 23.

The transmission assembly disclosed in connection with such a second embodiment is particularly advantageous, in that surprisingly it results in a considerable reduction of the effort necessary for propelling the vehicle. Moreover, a vehicle equipped with such a transmission assembly is particularly comfortable and easy to drive and can be operated also by people who are not particularly robust.

Similarly to the first embodiment, also the vehicle structure described in connection with this second embodiment can be advantageously equipped with a flywheel of the kind described with reference to Fig. 5.

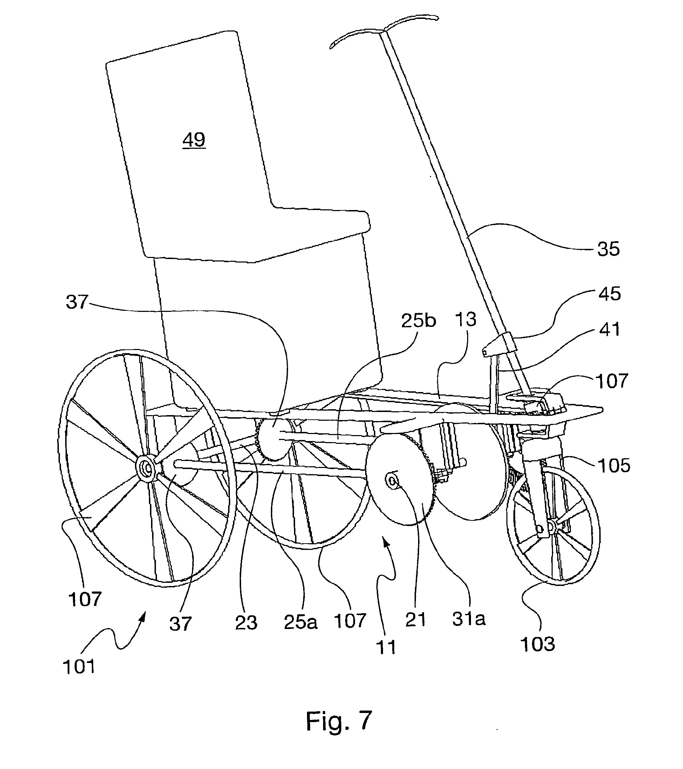

Turning now to Fig. 7, there is shown a terrestrial vehicle 101 embodying a vehicle structure 11 as described with reference to Fig. 6.

Vehicle 101 has a front wheel 103 rotatably and pivotally mounted on a fork 105, and two parallel rear wheels 107, for instance with greater diameter than front wheel 103, which are fastened at the ends of driven shaft 23. Fork 105 is moreover rotatably associated with frame 13 and can be rotated through the rotation of bar 35 to which it is associated by means of an articulated joint 107. A seat 49 for the vehicle driver is secured at the rear of frame 13, which is substantially trapezoidal.

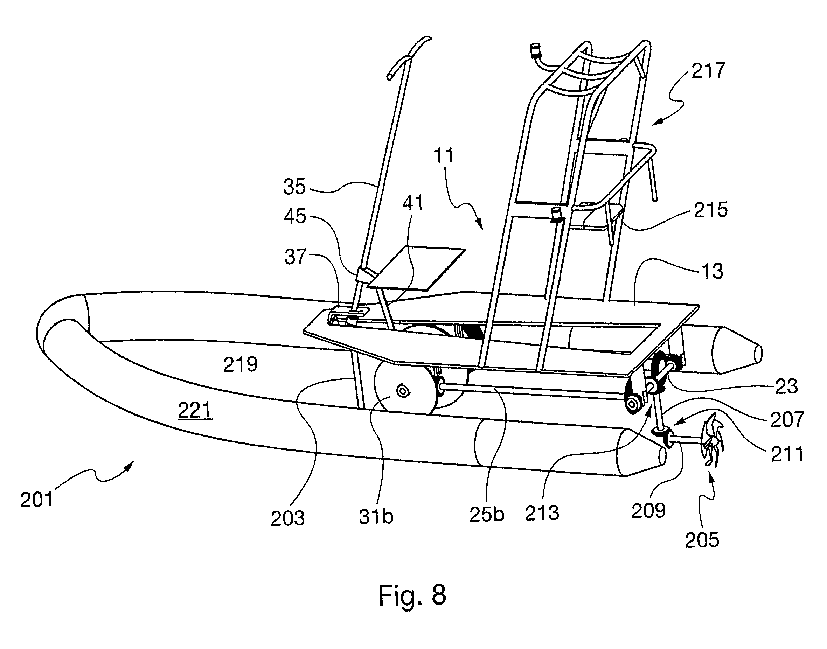

Turning to Fig. 8, there is shown a nautical vehicle 201 embodying the transmission assembly disclosed with reference to Fig. 6.

Vehicle 201 has a connecting bar 203 associated with actuating bar 35 in order to transmit the rotary motion of bar 35 to a rudder, not shown. Vehicle 201 is further equipped with a screw 205 driven by the rotation of driven shaft 23 through a transmission assembly comprising a pair of perpendicular shafts 207, 209, coupled through a gear 201 and receiving the motion from driven shaft 23 through a gear 213.

A seat 215 for the vehicle driver is provided, which seat is associated with a superstructure 217 secured centrally of frame 13 of structure 11 and arranged transversally across the vehicle. Vehicle 201 further has a hull 219 surrounding frame 13 and being, for instance, of the kind equipped with inflatable tubular elements 221.

Clearly, both vehicle 101 and vehicle 201 can embody vehicle structures made also in accordance with other embodiments, in particular the first embodiment disclosed with reference to Figs. 1 to 4.

It is clear that the above description is given only by way of non-limiting example and that further changes and modifications are possible without departing from the scope of the invention as defined in the following claims.

## Claims

1. A vehicle comprising a frame (13), a member (15) controlling the propulsion, associated with the frame (13) and arranged to oscillate relative to the frame, an assembly (17), controlled by said control member (15), for converting the reciprocating motion to a circular motion, and a transmission assembly (19) for transmitting the motion from a drive shaft (21), associated with said converting assembly, to a driven shaft (23) associated with a propelling member, said transmission assembly (19) including at least one transmission shaft (25), perpendicular to the drive shaft (21) and the driven shaft (23) and kinematically connected to the drive shaft (21) and the driven shaft (23) through respective gears (27, 29), **characterised in that** said member (15) is arranged to oscillate due to the pushing action exerted by the arms of a vehicle driver in such a way that said vehicle can be hand-propelled, wherein said assembly (17) converting the reciprocating motion into a circular motion includes a mechanism with a rod (41) and a crank (43), capable of converting the reciprocating oscillatory motion of the actuating bar (35) into a rotation of the drive shaft (21).

2. The vehicle as claimed in claim 1, wherein each said gear (27, 29) comprises a respective toothed wheel (31, 33), fit on the drive shaft (21) and the driven shaft (23), respectively, and a respective sprocket wheel (36, 37), fit on the transmission shaft (25).

3. The vehicle as claimed in claim 1 or 2, wherein the propulsion controlling member (15) comprises an actuating bar (35) having a proximal end (35') associated with the frame (13) through a support (37) pivotally mounted on the frame (13) so as to oscillate in a plane substantially orthogonal to the drive shaft (21).

4. The vehicle as claimed in claim 3, wherein the actuating bar (35) also has a distal end (35") having a handle (39) made as a handlebar.

5. The vehicle as claimed in any preceding claim, wherein the assembly (17) converting the reciprocating motion into a circular motion includes a flywheel (53) intended to make the propulsion motion of the vehicle smoother and more regular.

6. The vehicle as claimed in any preceding claim, wherein first and second transmission assemblies (19a, 19b) are provided, each including a respective transmission shaft (25a, 25b), perpendicular the drive shaft (21) and the driven shaft (23) and kinematically connected to the drive shaft (21) and the driven shaft (23) through gears (27a, 27b, 29a, 29b).

7. The vehicle as claimed in claim 6, wherein said transmission assemblies (19a, 19b) are located on opposite sides of the rod-crank mechanism (41, 43).

8. The vehicle as claimed in claim 6 or 7, wherein a respective free wheel device (59) is interposed between the rod-crank mechanism (41, 43) and each transmission shaft (25a, 25b).

9. The vehicle as claimed in any preceding claim, wherein said vehicle is a terrestrial vehicle equipped with wheels, and wherein said propelling member is a wheel.

10. The vehicle as claimed in any claim from 1 to 8, wherein said vehicle is a nautical vehicle equipped with a hull, and wherein said propelling member is a screw.

## Patentansprüche

1. Ein Fahrzeug mit einem Rahmen (13), einem Element (15) zur Steuerung des Antriebs, das mit dem Rahmen (13) verbunden und bezüglich des Rahmens schwingend angeordnet ist, einem durch das besagte Steuerelement (15) kontrollierten Aufbau (17) zur Umwandlung der Hin- und Herbewegung in eine kreisförmige Bewegung, und einem Antriebskomplex (19) zur Übertragung der Bewegung von einer mit der besagten Umwandlungsstruktur verbundenen Antriebswelle (21) an eine mit einem antreibenden Element verbundene angetriebene Welle (23), wobei der besagte Antriebskomplex (19) wenigstens eine Übertragungswelle (25) umfasst, die lotrecht zur Antriebswelle (21) und zur angetriebenen Welle (23) steht und jeweils über Getriebe (27, 29) kinematisch mit der Antriebswelle (21) und der angetriebenen Welle (23) verbunden ist, **dadurch gekennzeichnet, dass** das besagte Element (15) so angeordnet ist, um infolge der durch die Arme eines Fahrzeugfahrers ausgeübten Schubwirkung derart zu schwingen, dass das besagte Fahrzeug von Hand angetrieben werden kann, wobei der besagte Aufbau (17), der die Hin- und Herbewegung in eine kreisförmige Bewegung umwandelt, einen Mechanismus mit einer Stange (41) und einer Kurbel (43) einschließt, der in der Lage ist, die hin- und hergehende Schwingbewegung der Betätigungsstange (35) in eine Drehung der Antriebswelle (21) umzuwandeln.

2. Das Fahrzeug gemäß Patentanspruch 1, wobei jedes der besagten Getriebe (27, 29) jeweils ein an der Antriebswelle (21) und an der angetriebenen Welle (23) angebrachtes Zahnrad (31, 33) umfasst, sowie jeweils ein an der Übertragungswelle (25) angebrachtes Kettenrad (36, 37).

3. Das Fahrzeug gemäß Patentanspruch 1 oder 2, wobei das den Antrieb steuernde Element (15) eine Betätigungsstange (35) umfasst, deren proximales Ende (35') mit dem Rahmen (13) verbunden ist über eine als Drehpunkt dienende, am Rahmen (13) montierte Halterung (37), so dass sie auf einer im Wesentlichen orthogonal zur Antriebswelle (21) stehenden Ebene schwingt.

4. Das Fahrzeug gemäß Patentanspruch 3, wobei die Betätigungsstange (35) auch ein distales Ende (35") mit einem als Lenkstange ausgeführten Griff (39) hat.

5. Das Fahrzeug gemäß eines jeden der vorstehenden Patentansprüche, wobei der Aufbau (17) zur Umwandlung der Hin- und Herbewegung in eine kreisförmige Bewegung ein Schwungrad (53) einschließt, das dazu dient, die Antriebsbewegung des Fahrzeugs weicher und regelmäßiger zu machen.

6. Das Fahrzeug gemäß eines jeden der vorstehenden Patentansprüche, wobei erste und zweite Antriebskomplexe (19a, 19b) vorhanden sind, welche jeweils eine entsprechende Übertragungswelle (25a, 25b) einschließen, die lotrecht zur Antriebswelle (21) und zur angetriebenen Welle (23) steht und kinematisch über Getriebe (27a, 27b, 29a, 29b) mit der Antriebswelle (21) und der angetriebenen Welle (23) verbunden ist.

7. Das Fahrzeug gemäß Patentanspruch 6, wobei die besagten Antriebskomplexe (19a, 19b) an entgegengesetzten Seiten des Stangen/Kettenrad-Mechanismus (41, 43) positioniert sind.

8. Das Fahrzeug gemäß Patentanspruch 6 oder 7, wobei zwischen dem Stangen/Kettenrad-Mechanismus (41, 43) und jeder Übertragungswelle (25a, 25b) jeweils eine Freilaufvorrichtung (59) eingefügt ist.

9. Das Fahrzeug gemäß eines jeden der vorstehenden Patentansprüche, wobei das besagte Fahrzeug ein Landfahrzeug mit Rädern ist und wobei das besagte antreibende Element ein Rad ist.

10. Das Fahrzeug gemäß eines jeden der Patentansprüche von 1 bis 8, wobei das besagte Fahrzeug ein Wasserfahrzeug mit einem Rumpf ist und wobei das besagte antreibende Element eine Schraube ist.

## Revendications

1. Véhicule comprenant un châssis (13), un élément de contrôle (15) de la propulsion, associé avec le châssis (13) et positionné de façon à osciller par rapport au châssis, un groupe (17), contrôlé par ledit élément de contrôle (15), pour la conversion du mouvement alternatif en mouvement circulaire, et un groupe de transmission (19) pour la transmission du mouvement d'un arbre moteur (21), associé avec un groupe de conversion, à un arbre entraîné (23) associé avec un élément de propulsion, ledit groupe de transmission (19) comprenant au moins un arbre de transmission (25), perpendiculaire à l'arbre moteur (21) et à l'arbre entraîné (23) et relié cinématiquement à l'arbre moteur (21) et à l'arbre entraîné (23) au moyen d'engrenages correspondants (27, 29), **caractérisé en ce que** ledit élément (15) est positionné de manière à osciller grâce à l'action de poussée exercée par les bras d'un conducteur de véhicule de façon à ce que ledit véhicule puisse être propulsé à la main, où ledit groupe (17) de conversion du mouvement alternatif en mouvement circulaire comprend un mécanisme avec une tige (41) et une manivelle (43), en mesure de convertir le mouvement alternatif d'oscillation de la barre d'actionnement (35) en rotation de l'arbre moteur (21).

2. Véhicule selon la revendication 1, où chacun desdits engrenages (27, 29) comprend une roue dentée correspondante (31, 33), montée, respectivement, sur ledit arbre moteur (21) et l'arbre entraîné (23), et un pignon (36, 37), monté sur l'arbre de transmission (25).

3. Véhicule selon la revendication 1 ou 2, où ledit élément de contrôle (15) de la propulsion comprend une barre d'actionnement (35) ayant une extrémité proximale (35') associée avec le châssis (13) au moyen d'un support (37) monté de manière pivotante sur le châssis (13) de manière à osciller dans un plan essentiellement orthogonal par rapport à l'arbre moteur (21).

4. Véhicule selon la revendication 3, où la barre d'actionnement (35) présente en outre une extrémité distale (35") ayant une poignée (39) réalisée comme un guidon.

5. Véhicule selon l'une quelconque des revendications précédentes, où le groupe (17) de conversion du mouvement alternatif en mouvement circulaire comprend un volant (53) conçu pour rendre le mouvement de propulsion du véhicule plus homogène plus régulier.

6. Véhicule selon l'une quelconque des revendications précédentes, où sont prévus le premier et le deuxième groupes de transmission (19a, 19b), chacun comprenant un arbre de transmission correspondant (25a, 25b), perpendiculaire à l'arbre moteur (21) et à l'arbre entraîné (23) et relié cinématiquement à l'arbre moteur (21) et à l'arbre entraîné (23) au moyen d'engrenages (27a, 27b, 29a, 29b).

7. Véhicule selon la revendication 6, où lesdits groupes de transmission (19a, 19b) sont disposés sur des côtés opposés du mécanisme tige-manivelle (41,43).

8. Véhicule selon la revendication 6 ou 7, où ledit dispositif de roue libre (59) est interposé entre le mécanisme barre-manivelle (41, 43) et chaque arbre de transmission (25a, 25b).

9. Véhicule selon l'une quelconque des revendications précédentes, où ledit véhicule est un véhicule terrestre équipé de roues, et où ledit élément de propulsion est une roue.

10. Véhicule selon l'une quelconque des revendications de 1 à 8, où ledit véhicule est un véhicule nautique équipé d'une coque, et où ledit élément de propulsion est une vis.
